# EUROPEAN PATENT SPECIFICATION

(11) **EP 1 645 150 B1**
(45) Date of publication and mention of the grant of the patent: **05.12.2007**
(21) Application number: 04774013.9
(22) Date of filing: 25.06.2004
(51) Int. Cl.: H04Q 7/24, H04M 1/725

(54) **METHOD OF PROVIDING BACKGROUND SOUND FROM PERSONAL PORTABLE TERMINAL DURING COMMUNICATION**
VERFAHREN ZUR BEREITSTELLUNG VON HINTERGRUNDSCHALL AUS EINEM PERSÖNLICHEN TRAGBAREN ENDGERÄT WÄHREND DER KOMMUNIKATION
PROCEDE DE GENERATION DE BRUIT DE FOND EMANANT D'UN TERMINAL PORTABLE PERSONNEL PENDANT UNE COMMUNICATION

(30) Priority: 27.06.2003 KR 2003042704; 23.06.2004 JP 2004185303
(43) Date of publication of application: 12.04.2006
(73) Proprietor: Lee, Jin-Ho, Seoul 100-450 (KR)
(72) Inventor: Lee, Jin-Ho, Seoul 100-450 (KR)
(74) Representative: Winter, Brandl, Fürniss, Hübner Röss, Kaiser, Polte Partnerschaft Patent- und Rechtsanwaltskanzlei
(86) International application number: PCT/KR2004/001543
(87) International publication number: WO 2005/002255

(56) References cited:
- JP-A- 2003 046 606
- KR-A- 19990 031 008
- KR-A- 20000 054 075
- KR-Y1- 200 260 160
- US-A- 4 577 067
- US-A1- 2002 082 007
- US-A1- 2003 027 604

## Description

### Technical Field

The present invention relates to a method of providing music or sound effects as a background sound from a personal portable terminal during voice communication between a calling terminal and a receiving terminal, in which a background sound source can be downloaded from a background sound provider and stored in the personal portable terminal.

### Background Art

In general, a background sound service during communication can be described by a communication service where background music or sound effect is delivered while voice-communicating between a calling terminal and a receiving terminal through a wire or wireless communication network. For example, a conventional background sound service is provided from a background sound provider connected to a mobile switching center (MSC), which manages calling and receiving terminals within the mobile communication network. Due to tremendous advance in electronics and communication technologies, recently, miniaturized and high-performance wire or wireless terminals have been widely spread and popularized. In concert with these communication environments, various background music services for a wire or wireless terminal have been proposed. One of them is exemplified by Korean Patent Publication No. 2002-85579 entitled "A method of transmitting a background music during communication of mobile communication terminals."

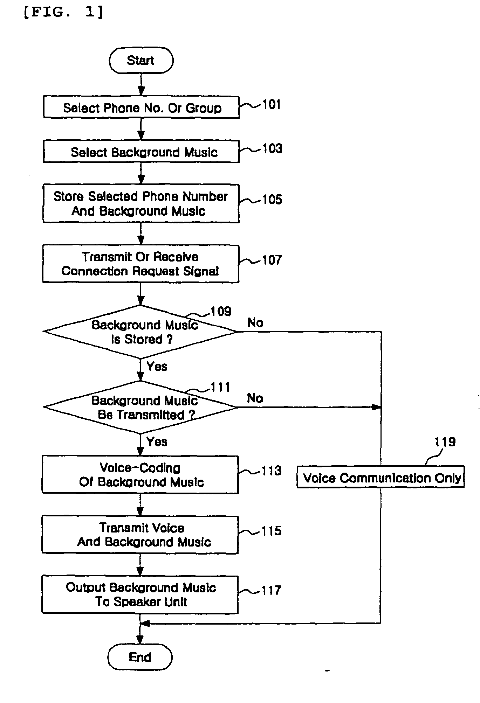

FIG. 1 is a flow chart illustrating a conventional background music delivery operation during the communication between mobile communication terminals. Specifically, FIG. 1 illustrates procedures of transmitting a background music, simultaneously while voice-communicating using the mobile communication terminals.

Referring to FIG. 1, the central processing unit equipped in the mobile communication terminal displays a phone number selection window in the display unit in order for the users to select a phone number(s), to which they want to transmit a background music while communicating therewith (step 101). At this time, the user can select an individual phone number or a group of phone numbers, to which the selected background music is to be transmitted. Furthermore, the background music to be added during communication can be selected, depending on the communication time and the number of communications (step 103).

After selecting the phone number, the central processing unit retrieves background music stored in the memory unit and provides a music selection window in the display unit where the retrieved music is displayed so as to be selected by the user. At this time, the user can select the displayed background music from the music selection window correspondingly to the selected phone number or group. Then, the central processing unit stores the phone number or group selected at the step 101 and the background music selected at the step 103 correspondingly to each phone number or group (step 105) such that, while communicating with the selected phone number or group, the corresponding background music can be output to a speaker unit.

Thereafter, the user transmits a connection-request signal to a counterpart terminal using a key input unit, or receives a connection-request signal from the counterpart terminal (step 107). At this time, the central processing unit determines whether a communication channel is to be established, according to the signal generated by the operation of the key-input unit. As the result of determination, if a communication channel is established, the central processing unit retrieves the memory unit to make a decision as to whether it has a background music corresponding to the outgoing or incoming phone number, with which the user wants to communicate (step 109). As the result of the operation in the step 109, if a corresponding background music exists, the central processing unit determines if an input signal is received for using the stored background music with respect to the outgoing or incoming phone number (step 111).

As the result of determination at the step 111, if there exists an input signal for using the established background music, first the signal-processing unit carries out voice-coding of the background music transferred from the central processing unit (step 113). After that, the voice-coded background music is transmitted to the counterpart terminal, along with voice signal (step 115). Consequently, when start to communicate with the counterpart terminal, the background music can be output to the speaker unit (step 117).

On the other hand, if the result of the determination at the above described steps 109 and 111 is negative, i.e., there does not exist a background music or an input signal, the central processing unit allows a voice signal only to be transmitted to the counterpart terminal so that a voice communication can be carried out, without background music (step 119).

The patent publication US2002/0082007 discloses a communication system between terminals, in which background music is selected and played. A suitable music composition is selected by means of a menu or by means of an automatic state of mind recogniser.

As described above, the conventional background sound service is designed such that a background sound is set up correspondingly to a calling or receiving number and the established background sound is output onto the communication channel between the calling and receiving terminals. Therefore, the service users can listen to the background music, while voice-communicating with one another.

According to the above-described conventional technique, however, a background sound source is built-in or stored in a mobile communication terminal or personal portable terminal by terminal manufacturers, and thus users can transmits only the stored or built-in background sound onto the communication channel, when they start to communicate using their terminals. Therefore, the users, while communicating, can not change and control the background music or sound effects, so that it can not readily realize a unique communication associating a personality or individuality.

Furthermore, with the conventional terminal providing a background sound service, the user can not stop the transmission of background sound, restart the transmission, or adjust the volume of background sound, without intermitting the voice-communication. Therefore, the communications between the terminal users may be spoiled or disturbed due to the uncontrollable background sound since the calling party can not consider any circumstances of the receiving party while communicating.

In addition, the users can use only the background sound source stored in the conventional communication terminal, and can not readily update the stored or built-in background sound source.

### Disclosure of Invention

Accordingly, the present invention has been made in order to solve the above problems occurring in the prior art, and it is an object of the invention to provide a method of providing a background sound from a personal portable terminal to a counterpart terminal during communication, where various background sounds can be selectively transmitted into the communication channel from a personal portable terminal along with voice, while communicating through a wire or wireless communication network.

Another object of the invention is to provide a method of providing a background sound from a personal portable terminal to a counterpart terminal during communication, in which various background sound source can be downloaded through a wire or wireless communication network and stored in a personal portable terminal, and the stored background sound source can be updated whenever and wherever needed.

Yet another object of the invention is to provide a method of providing a background sound from a personal portable terminal to a counterpart terminal during communication, where a user can manage the background sound source stored in his or her own terminal and control the transmission of background sound in many ways by using his or her own portable terminal.

A further object of the invention is to provide a personal portable terminal, which is capable of carrying out the above method according to the present invention.

According to one aspect of the present invention, there is provided a method of providing a background sound during communication through a wire or wireless communication network, which includes a calling party MSC (mobile switching center) managing at least one calling terminal and a receiving party MSC managing at least one receiving terminal, at least one personal portable terminal among the calling terminal and the receiving terminal providing the background sound using a plurality of background sound sources. The method comprises steps of: a) connecting with a background sound providing service unit, wherein the background sound providing service unit includes a database storing a plurality of background sound source files; b) downloading a background sound source file from the background sound providing unit, wherein the downloaded background sound source file is stored in a memory unit of the personal portable terminal; c) setting the downloaded background sound source file correspondingly to at least one of plural dial keys of the personal portable terminal by using a background sound control program; d) establishing a communication channel between the calling terminal and the receiving terminal according to a connection request call, wherein the communication channel is established by at least one MSC within the wire or wireless communication network; e) wherein execution of the background sound, intermission of the execution, and adjustment of output level is controlled in the communication channel according to a key input of the personal portable terminal; and f) wherein the execution of the background sound, the intermission of the execution, and the adjustment of output level is controlled by a key input signal corresponding to a number key 1 to 9, a number 0, and a star (*) and pound (#) key respectively of the personal portable terminal.

The method according to the invention may further comprise steps of: a) receiving a list of background sound source files from the background sound providing service unit; and b) transmitting a download request signal to the background sound providing service unit, with respect to at least one from the list of background sound source files.

The method according to the invention may further comprise a step of transmitting a pre-listening request signal to the background sound providing service unit, with respect to at least one from the list of background sound source files.

The method according to the invention may further comprise a step of transmitting to the background sound providing service unit a telephone number of a personal portable terminal or a terminal identification, to which a background sound source file is to be downloaded.

The method of the invention may further comprise a step of selecting a background sound communication mode by the calling terminal or the receiving terminal, before establishing the communication channel.

The method of the invention may further comprise a step of receiving a background sound control program from the background sound providing service unit, wherein the background sound control program is selected based on the type of the personal portable terminal.

According to the invention, the personal portable terminal can have a background sound control program, which is stored in a memory unit equipped in the personal portable terminal.

According to the invention, the background sound control program can include a voice modulating program.

According to the invention, when pressing down a first key of the personal portable terminal, a next background sound source file is reproduced, and when pressing down a second key of the personal portable terminal, a previous background sound source file is reproduced.

According to the invention, the connection to the background sound providing service unit may include a connection through a wire or wireless communication service using WEB and WAP, and through an automatic response service (ARS).

According to the invention, the background sound providing service unit includes a personal computer and a personal digital assistant (PDA).

### Brief Description of Drawings

Further objects and advantages of the invention can be more fully understood from the following detailed description taken in conjunction with the accompanying drawings in which:
FIG. 1 is a flow chart illustrating a conventional background music delivery operation during the communication between mobile communication terminals;
FIG. 2 schematically shows the configuration of a wire or wireless communication network where a background sound providing service according to the present invention can be applied;
FIG. 3 is a flow chart explaining a procedure of downloading the background sound source files according to one embodiment of the invention;
FIG. 4 is a flow chart showing a procedure of setting a background sound to a personal portable terminal according to one embodiment of the invention;
FIG. 5 is a flow chart illustrating a communication procedure using a background sound service according to one embodiment of the invention; and
FIG. 6 is a block diagram illustrating the construction of a personal portable terminal suitable for a background sound service during communication according to one embodiment of the invention.

### Best Mode for Carrying Out the Invention

Referring to the accompanying drawings, the preferred embodiments according to the present invention are hereafter described in detail. It is noted that the following description of preferred embodiments and the features depicted in the drawings are illustrative of the present invention and is not to be construed as limiting the invention. It is also noted that details on the well-known elements and their functions will not be described so as not to avoid any possibility of obscuring the gist of the present invention.

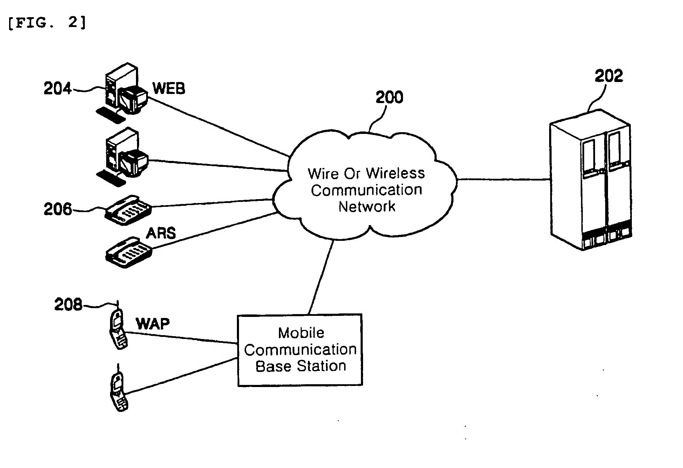

FIG. 2 schematically shows the configuration of a wire or wireless communication network where a background sound providing service according to the present invention can be applied

Referring to FIG. 2, the wire or wireless communication network 200 is composed of a user terminal such as a personal computer 204, a wire telephone 206 or a personal portable terminal 208, and a wire or wireless communication service unit such as WEB, WAP, automatic response service (ARS) unit or the like. As shown in FIG. 1, a background sound providing service unit 202 according to the invention is provided to the wire or wireless communication network 200. According to one embodiment of the invention, the user terminals 204, 206 or 208, which may need a background sound service, are able to be connected to the background sound providing service unit 202 through the wire or wireless communication network 200. Hereinafter, the background sound providing service unit 202 will be referred to as a "BSPS unit."

In this embodiment, the BSPS unit 202 includes a database, in which background sound source files are stored. In addition, the BSPS unit 202 is configured such that a user can be connected thereto through a computer communication service or an Internet service. That is, the user terminals may be connected to the BSPS unit 202 through any private Internet service provider or on-line service provider, which is connected to the wire or wireless communication network 200. Furthermore, the personal portable terminal 208 may download the background sound source files through a wireless Internet service. The background sound source file includes an audio file, which is transmittable or receivable between computer devices. -

For the purpose of the download service of the background sound source according to the present invention, the background sound source is made in the form of source files by using various audio data, and the background sound source files are stored in a database provided in the BSPS unit 202. The background sound source includes a variety of sound source files, which are suitable for various types of user terminal.

In the case where a user wants to download a background sound source file using his or her portable terminal 208, first the user connects his or her terminal to the BSPS unit 202 through the wire or wireless communication network 200. Then, when the personal portable terminal 208 is connected to the BSPS unit 202, the unit transmits the list of background sound source files to the connected terminal 208. By using his or her terminal, the user can listen to any background sound selected from the transmitted list before downloading, so that only desired background sound source files, for example his favorite or agreeable sounds, can be downloaded and stored in the personal portable terminal 208. Afterwards, the stored background sound source files can be used as a background sound source when communicating with others.

As describe above, in this embodiment, the list of background sounds stored in the BSPS unit is transmitted to the user portable terminal, and the user downloads a desired background sound source file(s) selectively from the transmitted list, and stores them in his personal portable terminal. The user can set a predetermined dial key to a specific background sound such that he can select, by one-touch key operation, a desired background sound to be transmitted to a receiving party, along with voice signal. Similarly, a receiving party may send to a calling terminal a background sound stored in his portable terminal in the same way.

In other words, this embodiment of the invention is carried out by the following three steps. The first step comprises sub-steps of pre-listening background sounds stored in the BSPS unit, selecting and downloading a desired background sound source file(s), and storing them in the user's personal portable terminal. The second step includes sub-steps of outputting the stored background sound source files and listening them again in order to find out the characteristics of each background sound, and establishing a dial-key operation, for example, in order to control the execution and intermission of the background sound transmission, and the adjustment of the output level, or the like. In the final third step, a calling or receiving party sends the background sound stored in his personal portable terminal in real-time to the counterpart, together with a voice signal, while communicating with each other.

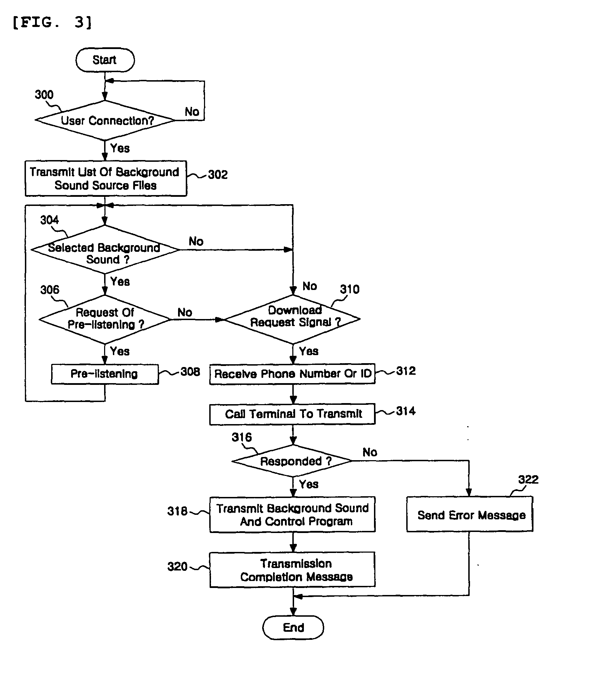

FIG. 3 is a flow chart explaining a procedure of downloading the background sound source files according to one embodiment of the invention.

Referring to FIG. 3, the BSPS unit 202 determines whether a user' terminal is connected therewith to download the background sound source (step 300). As the result of the determination, if connected, the BSPS unit 202 transmits the list of background sound source files stored therein to the connected user, i.e., the connected personal portable terminal (step 302). Then, the BSPS unit 202 determines whether a selection input signal corresponding to a particular background sound is received from the connected personal portable terminal (step 304).

On the other hand, the list of background sound source files transmitted at the step 302 can be displayed on a personal computer monitor or a display unit of personal portable terminal in the same way as in the general computer communication. At this time, the user may select and pre-listen to a particular background sound from the transmitted list (step 306). When the BSPS unit 202 receives a pre-listening request signal from the connected personal portable terminal, the unit executes the selected background sound source file such that the connected user can listen through a loud speaker of his or her own portable terminal (step 308). At this time, if the user does not like the executed background sound, he can select and pre-listen to another background sound.

Thereafter, the user requests downloading of a selected or pre-listened background sound source file. I.e., the BSPS unit 202 determines whether a download request signal is received from the user portable terminal (step 310). As the result of the determination, if the download request signal is received, responding to the download request signal the BSPS unit 202 asks the telephone number of a personal portable terminal to which the requested background sound source file is to be transmitted. After that, the BSPS unit 202 receives from the user portable terminal an input signal of the telephone number or ID for identifying a personal portable terminal, to which the requested source file is to be transmitted and downloaded (step 312).

In order to transmit a background sound source file, first the BSPS unit 202 calls the terminal which downloads the source file (step 314). If the terminal responds (step 316), the BSPS unit 202 transmits to the responded terminal the background sound source file selected by the user (step 318). At this time, the BSPS unit 202 may retrieve the personal portable terminal to see whether it has a background sound control program equipped therein, and transmit a background sound control program according to the user's selection (step 318). In this case, depending on the type of the personal portable terminal, a suitable background sound control program is automatically selected and transmitted to the terminal from the BSPS unit. Thereafter, the BSPS unit sends a transmission completion message to the personal portable terminal (step 320). The transmission completion message may be displayed on the display unit of the personal portable terminal.

On the other hand, at the step 310 described above, if the user does not request download of a background sound source file, the BSPS unit proceeds to the step 304. Of course, it is possible to design such that the above steps 306 and 308 can be omitted, and thus the step 310 can be carried out right after the step 304. At the step 316, if the personal portable terminal does not answer to the call of the step 314, the BSPS unit may send an error message to the personal portable terminal (step 322).

As described above, the user can select and download background sound source files to his taste to his personal portable terminal after selecting and pre-listening to each of the various background sounds stored in the BSPS unit. Then, while communicating, the user can use the background sound stored in his own portable terminal by using the background sound control program.

The above-described background sound control program is configured such that during communication it can identify a key input and execute a series of commands, which are established corresponding to each dial key. Furthermore, the background sound control program enables the personal portable terminal to display the downloaded background sound source file on its own display unit, to output and pre-listen to a selected one through the personal portable terminal, and to delete any selected background sound source file when required. In addition, the background sound control program allows for setting each background sound correspondingly to a number key of the personal portable terminal so that the background sound can be conveniently used during communication, by simply pressing down the corresponding number key. Also, each command to be executed by the background sound control program is established by means of each individual or combination of keys, so that, while communicating, the control program can identify a key input and carry out the command corresponding to the identified key input, for example, execution of background sound, intermission of the execution, change of background sound, or the like. The background sound control program will be hereinafter explained in greater detail through an exemplary program.

According to the present invention, the background sound control program is generally divided into two parts. The first part is designed such that, before starting to communicate, each background sound stored in the personal portable terminal can be pre-set to correspond to one of the number key 1 to 9 of the portable terminal. The second part enables the personal portable terminal to identify a key input and execute a series of orders according to the key input, for example, - execution of background sound source files, intermission of the execution, adjustment of output volume, and the like.

The background sound control program of the invention may be developed by using a development tool supplied from terminal manufacturers or communication service providers, and the development tool provides for various functions, including a function for identifying a key input and a function for reproducing a media file such as a sound source file. Therefore, these functions allow for identifying an input key from the personal portable terminal.

In the background sound control program of this embodiment, each key of a personal portable terminal has a pre-defined value. That is, the number key 0 to 9 corresponds respectively to KEY_NUM0, KEY_NUM1, KEY_NUM2, KEY_NUM3, KEY_NUM4, KEY_NUM5, KEY_NUM6, KEY_NUM7, KEY_NUM8, and KEY_NUM9, and the star key and pound key correspond to KEY_STAR, and KEY_POUND respectively. These pre-defined values may be set differently depending on different terminal manufacturers or communication service companies. In addition, a function for reproducing an audio file such as a background sound source file may be embodied through built-in functions equipped in the personal portable terminal.

In the background sound control program of the invention, the first part for setting the background sound correspondingly to the number key 1 to 9 is composed of the steps of outputting the list of background sound source files stored in the personal portable terminal on the display unit thereof, selecting one from the displayed list, reproducing the selected one in order to pre-listen, and setting the selected -one to one of the number keys. The steps may be embodied in the following manner.

```
     bgmList = getBgmList(); // get the list of background
 sound source files stored in the terminal
     Display.display(bgmList); // display the list of
 background sound source files
     KeyPressed(keyCode) // wait a key input signal
     {
     if (key = reproduction of sound) // if the key input
 requests for reproduction of background sound source files
     { CurrentAudio = AudioSystem.getAudioClip(); //
 prepare for reproduction of audio file
     CurrentAudio.Open(bgmList[indexSelect]); // prepare
 for reproduction of selected background sound source file
     CurrentAudio.Play(); // reproduce the selected
 background sound source file
     }
     else if (key = intermission of reproduction) // if
 the key input request for stopping the reproduction
     { CurrentAudio.Stop(); // stop the reproduction of
 background sound source file
     }
     else if (key = delete background sound source file)
 // if the key input requests for deleting the selected
 background sound source file
     { File xFile = File(bgmList[indexSelect]); // get
 information on the selected background sound source file
     xFile.Delete(); // delete the selected background
 sound source file
     }
     else if (key = set a background sound source file) //
 if the key input requests for setting the selected
 background sound source file to a key number
     { num = keyPressed(); // wait a key input of one of
 the number 1 to 9
     bgmSetting(num, bgmList[indexSelect]); // set the
 selected background sound source file to the key input
     }
     else if (key = delete the list of BSSF) // if the key
 input requests for deleting the list of background sound
 source files
     { bgmList.Delete(currentIndex); // delete the list of
 background sound source files
     }
     }
```

Again, the background sound source files as set above may be controlled such that the above-set background sound source files can be reproduced in sequence or in a random order, or can be reproduced according to a particular key input by a user.

In the background sound control program of the invention, the second part for carrying out, according to a key input during communication, reproduction of a background sound, intermission of reproduction and adjustment of volume is composed of the steps of activating the background sound control program, identifying a key input, and executing reproduction of background sound source file, intermission of reproduction and volume adjustment. Further, the key input signal can be easily identified by means of a development tool supplied by terminal manufacturers or communication service providers.

In the background sound control program of the invention, for example, the second part described above, i.e., identification of a key input during communication and, according to the key-input signal, reproduction of a background sound source file, intermission of reproduction and volume adjustment or the like can be embodied in the following manner.

```
     bgmList = getBgmList(); // get information on the set
 background sound source files
     // prepare for reproduction according to the
 information
     CurrentAudio = AudioSystem.getAudioClip(bgmList);
     while (true)
     {
     // wait for a key input
     key = keyPressed();
     // if the key is a number 1 to 8
     if (key >= KEY_NUM1 key <= KEY_NUM9) // reproduce a
 background sound source file
     {
     // stop if a background sound source file is being
 reproduced
     if (CurrentAudio.isPlay() == true)
 CurrentAudio.Stop();
     // prepare for reproduction of the selected
 background sound source file
     CurrentAudio.Open(bgmList[key]);
     // reproduce the selected background sound source
 file
     CurrentAudio.Play();
     }
     // if the key is a number 0.
     else if (key == KEY_NUM0) // stop reproduction
     {
     // stop if a BSSF is being reproduced
     if (CurrentAudio.isPlay() == true)
 CurrentAudio.Stop();
     }
     // increase volume if the key is a pound key
    else if (key = KEY_POUND) // increase volume
     {
     // get the current volume
    currentAudioFormat = AudioSystem.getClipFormats();
     currentVolume = AudioSystem.getVolume();
     // increase volume
     currentVolume++;
     // set the increased volume
     AudioSystem.setVolume(currentAudioFormat,
 currentVolme)
     }
     // decrease volume if the key is a star key *
     else if (key = KEY_STAR) // decrease volume
     {
     // get the current volume
     currentAudioFormat = AudioSystem.getClipFormats();
     currentVolume = AudioSystem.getVolume();
     // decrease volume
     currentVolume--;
     // set the decreased volume
     AudioSystem.setVolume(currentAudioFormat,
 currentVolume);
     }
     }
```

As described above, the background sound control program is configured to identify a key input while communicating, to reproduce a background sound source file stored in the user portable terminal, to stop the reproduction when required, or to adjust the volume of background sound being reproduced according to the key input.

The above-described background sound control program is illustrated by way of an example for the purpose of presenting an algorithm thereof. Therefore, it may be embodied in many ways, depending on the type of terminals and the terminal manufacturer, and the development tools supplied by the terminal manufacturer and the communication service company.

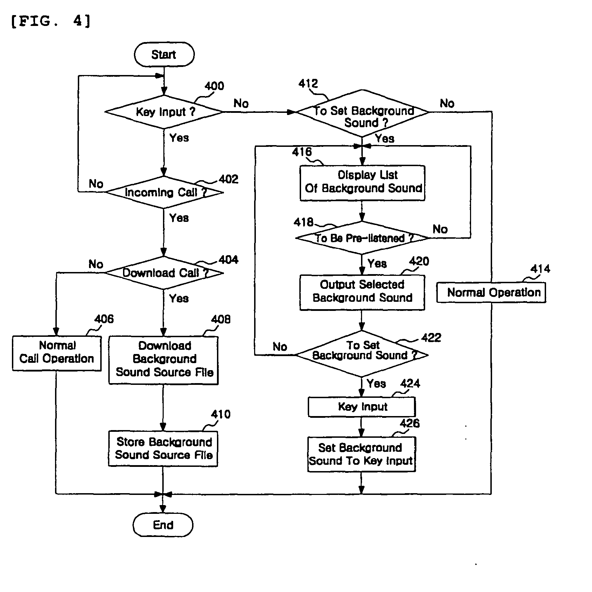

FIG. 4 is a flow chart showing a procedure of setting a background sound to a personal terminal according to one embodiment of the invention.

Referring to FIG. 4, first, a central processing unit (CPU) such as a micro process unit (MPU) equipped in a personal portable terminal determines whether a key input occurs in order to carry out a command (step 400). As the result of the determination, if a key input is received, the CPU determines whether the key input is an incoming signal (step 402). In other words, at the steps 400 and 402, the personal portable terminal waits for a key input signal or an incoming signal and, if a key input is for setting a background sound, carries out step 412, otherwise proceeds to the step 402. At the step 402, the CPU determines if the key input is an incoming signal.

Thereafter, if the key input is an incoming signal, the CPU determines whether the incoming signal is an incoming call from the BSPS unit, i.e., a call for a download service of background sound source files (step 404). If not a download call, the CPU carries out a normal incoming call operation (step 406).

As the result of the determination at the step 404, if the incoming signal -is a download call, the CPU downloads the background sound source file and stores it in the personal portable terminal (steps 408, 410). That is, referring to FIG. 2, the personal portable terminal denoted at 208 responds to a download call from the BSPS unit 202 and receives background sound source files and stores them in the memory unit of its own.

On the other hand, at the above step 400, if the personal portable terminal at a standby state receives a key input signal corresponding to the setting of background sound, the CPU carries out steps 414 to 426 in response to the key input. Specifically, the CPU determines whether the key input is to set a background sound or to change an already-set background sound (step 412). This key input signal for setting or changing a background sound may be embodied by an exclusive button provided by the terminal manufacturer or by a combination of keys or a menu selection. If the key input is not to set or change a background sound, the step 414 is carried out as in the operations of normal key inputs (step 414).

On the other hand, as the result of the determination at the step 412, if the key input is to set or change a background sound, the CPU displays the list of background sound source files stored in its own memory and waits for user's selection (step 416). At this time, the user may select one from the list and pre-listen to the selected background sound (step 418 and step 420). Thereafter, the user sets the selected background sound to a particular key (button) (step 422, 424 and 426).

As described above in connection with FIG. 4, the user can pre-listen to each of the background sounds stored in his own portable terminal, select his favorite sounds or agreeable sounds to his taste, and set and use them as a background sound during communicating with others through his portable terminal. The user can store background sound source files in his own portable terminal as many as possible so long as the capacity of the memory unit allows for storing them. The background sound source files already-stored in the user terminal can be deleted, when required, in the same way that general information stored in a personal portable terminal is deleted.

As described above, when a user communicates with other receiving party along with a background sound, the receiving or calling party can send to the counterpart the stored background sounds in sequence or in a random order, together with voice signal by carrying out a key operation pre-established to execute the corresponding commands. Therefore, an individuality or personality of the communication can be realized. A user can download background sound source files from the BSPS unit through a wire or wireless communication network, and store them in his own portable terminal, so that a background sound can be reproduced by means of a simple key operation during communication, along with intermission of the reproduction, volume control and the like.

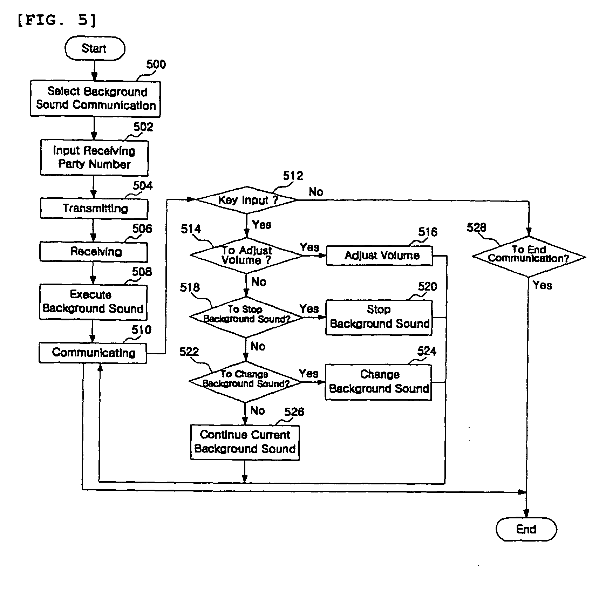

FIG. 5 is a flow chart illustrating a communication procedure using a background sound service according to one embodiment of the invention.

Referring to FIG. 5, in order to communicate along with a background sound, first the calling party uses an established menu or presses down a pre-defined key, and input the receiving party number to initiate a call (steps 500, 502 and 504). When the receiving party responds and a communication channel is established (step 506), the calling party selects and -reproduces one of the background sounds stored in his portable terminal by operating a key corresponding to the background sound to be selected and the reproduction of it (step 508). In this way, the calling party can communicate with the receiving party while transmitting various background sounds (step 510).

At this time, the calling party can execute reproduction of a background sound, intermission of the reproduction and volume adjustment by pressing down a corresponding dial-key during communication (step 512). That is, the calling party controls the volume of background sound by means of a specific key input (step 516). The personal portable terminal determines if the input key is to adjust the volume of background sound (step 512 and step 514). On the other hand, the calling party can change the background sound being reproduced by operating a specified key for changing the background sound (step 524). At this time, the personal portable terminal determines whether the key input is to switch the background sound (step 512 and step 522). Furthermore, the calling part can stop the background sound being reproduced (step 520). At this time, a decision as to whether the key input is to stop the reproduction of background sound is made (step 512 and step 518).

As the result of the determination at the above steps 512, 518, 522, if the key input is not to control or change the background sound being played, the reproduction of the background continues (step 526). If the calling party ends the communication or press down a specified key for ending the communication, the transmission of the background sound ends at the same time. In other words, if the key input is not to control the background sound, a normal service is continued in the same way as in a normal mode of voice communication or data communication.

On the other hand, when a receiving party responds to a calling party, the calling party can provide a background sound service according to the present invention, by selecting a key specified corresponding to the background service mode. This operation is well-known to those skilled in the art, and thus details on the operation will not be described. This is, in the present invention, a calling or receiving party, by mean of his own portable terminal, provides a background sound during communication.

As describe above, according to the present invention, a user can pre-listen to a background sound from a unit storing a plurality of background sound source files through a wire or wireless communication network, then select and download a favorite background sound source file, and store it in his own personal portable terminal. More specifically, the user terminal is connected through a wire or wireless communication network to a service providing unit having a database with background sound source files stored therein. Then, the service providing unit transmits a list of background sound source files to the connected user terminal, and the user requests for downloading of a selected background sound source file from the transmitted list. The requested background sound source file is transmitted to the user terminal from the service providing unit, which sends a transmission completion message to the personal portable terminal upon completion of transmission and downloading.

Next, according to the present invention, the downloaded background sound source file may be set up as a background sound of a personal portable terminal. Specifically, the list of the downloaded and stored background sound source files can be displayed on a display unit of the personal portable terminal. The user can pre-listen to each of the listed background sound and select a specific background sound and set the selected one to a background sound, which is to be used during communication.

Furthermore, according to the present invention, the background sound stored in the user portable terminal can be transmitted to a counterpart in real-time while communicating, along with voice signal. In other words, a calling or receiving party can output a background sound stored in his own portable terminal to the counterpart when communicating. More specifically, each background sound stored in the user portable terminal can be pre-set to a specific dial key, for example, number 1 to 9, each corresponding to a specific background sound. In addition, other specific dial-key, for example, number 0, star-key (*) or pound-key (#), can be pre-set to a command for reproducing a background sound source file and transmitting to the receiving party, for stopping the transmission, or for adjusting the output volume of a background sound being transmitted. Therefore, while communicating, the background sound service can be controlled by simply operating the key pre-set to each corresponding command.

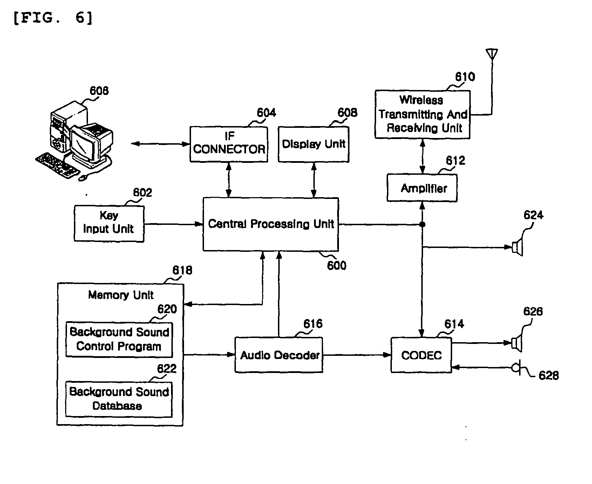

FIG. 6 is a block diagram illustrating the construction of a personal portable terminal suitable for a background sound service during communication according to one embodiment of the invention.

Referring to FIG. 6, the personal portable terminal comprises a central processing unit 600, a key input unit 602, a IF connector 604, a display unit 608, a wireless transmitting and receiving unit 610, an amplifier 612, a CODEC 614, an audio decoder 616, a memory unit 618, a loud speaker 624 and 626, and a mike 628. Specifically, the central processing unit 600 may include a micro processing unit (MPU) and control the general operation of the personal portable terminal. According to a signal input by the key input unit 602, the central processing unit 600 is operated such that the audio decoder 616 reproduces a background sound source file stored in a background sound source file database 622 into an analog signal. In addition, the CODEC 614 synthesizes the analog signal with a voice signal from the mike 628. The synthesized signal is transmitted to a receiving party through the wireless transmitting and receiving unit 610.

The key input unit 602 is composed of plural number and function keys and, when a user presses down a particular key, sends to the central processing unit 600 a signal corresponding to the key input. In this invention, the number and function keys are used during communication in order to carry out execution of reproduction of a background sound, change of background sound, automatic continuous execution, intermission of execution, control of output level, or the like. In this case, when the central processing unit 600 receives a key input from the key input unit 601, it determines, by means of a background sound control program 620 stored in the memory unit 618, whether the key input is a background sound control key. The background sound control program 620 is configured such that a background sound can be output to a communication channel, and intermission of background sound output or adjustment of output level can be carried out, according to a key input signal during communication.

The IF-Connector 604 enables the personal portable terminal to be connected to an external device such as a hand free equipment and a data link, and allows for software up-grade and wireless date communication therethrough. In this embodiment, for example, the personal portable terminal can be connected through the IF-Connector 604 to a personal computer 606 or a personal digital assistant (PDA), through which a background sound source file can be downloaded and stored in the personal portable terminal.

The display unit 608, such as a LCD, displays various operational states of the personal portable terminal. Also, the display unit 608 displays various information or menus related to the background sound service of the invention, so that the user can operate his personal portable terminal while watching the information or menu expressed on the display unit 608, i.e., setting a background sound, pre-listening, downloading, deletion of background sound source file, or the like.

The wireless transmitting and receiving unit 610 transfers a signal received through an antenna to the amplifier 612 and transmits a voice signal and data transferred from the amplifier 612 through the antenna.

The CODEC 614 converts an analog voice signal from the mike 628 into a digital signal and sends it to the amplifier 612. Also, the CODEC 614 converts a digital signal from the amplifier 612 into an analog signal and sends it to the loud speaker 624 and 626.

The memory unit 618 basically stores an address book, a telephone directory, bell sounds and the like. Also, the memory unit 618 includes a background sound database for storing a plurality of background sound source files, and stores a background sound control program including various command routines each corresponding to a key input during communication. The background sound source files stored in the memory unit 618 can be up-dated by downloading from a contents provider through a wireless communication network. Also, The background sound source files stored in the memory unit 618 can be up-dated by downloading from other media such the personal computer 606 or a PDA, which is connected to the terminal through the IF Connector 604. Furthermore, the background sound control program may be stored in a memory of the personal portable terminal, or in a separate memory element equipped in the personal portable terminal. Therefore, by using the background sound control program equipped in the personal portable terminal, the user can use selectively a built-in background sound or a downloaded one from a service provider. Also, the personal portable terminal can be connected to the service provider and conveniently update its built-in background sound control program.

The audio decoder 616 converts the background sound source file, which is stored in the background sound database 622 of the memory unit 618, into an analogue signal, and sends the analog background sound signal to the loud speaker 624 or the receiver 626 through the CODEC 614. At this time, the CODEC 614 synthesizes the voice signal from the mike 628 with the analog background sound signal, and transmits the synthesized signal through the wireless transmitting and receiving unit 610. Furthermore, in the case where the user voice signal is not received, the audio decoder 616 continues to send the background sound to the receiving party until a stop key signal is input by the user.

As described above, the personal portable terminal of the invention includes a background sound control program, which can be downloaded from a service provider, or stored in a memory unit of the personal portable terminal or a separate built-in memory equipped in the terminal. Particularly, in the case where a background sound control program is equipped in the terminal by the manufacturer, the user does not need to download from the service provider, but the equipped program can be up-graded from the service provider by connecting the personal portable terminal thereto.

### Industrial Applicability

As described above, the present invention provides for a novel communication environment, in which a background sound source file and a control program thereof can be downloaded through a wire or wireless communication network and stored in a user portable terminal, whereby a calling party can transmit the stored background sound to a receiving party, along with his voice, while communicating. Therefore, more satisfactory and convenient communication service can be provided to the portable terminal users. Furthermore, according to the invention, the background sound may be pre-set to correspond to a particular keyof a personal portable terminal, and, when providing the background sound service, the user can control the reproduction of background sound, intermission of the reproduction and output level by means of a simple key operation, thereby being able to provide the users with more convenient and flexible background sound service, together with a personality or individuality associated with the communication.

While the present invention has been described with reference to the particular illustrative embodiments, it is not to be restricted by the embodiments but only by the appended claims. It is to be appreciated that those skilled in the art can change or modify the embodiments without departing from the scope of the present invention. For example, the present invention may be applied to various other type of personal portable terminal such as a cellular phone, a smart phone, a PDA and the like. In addition, the background sound source file may be downloaded through an automatic response center using a

## Claims

1. A method of providing a background sound during communication through a wire or wireless communication network (200), which includes a calling party mobile switching center MSC managing at least one calling terminal and a receiving party MSC managing at least one receiving terminal, at least one personal portable terminal of the calling terminal and the receiving terminal (204, 206, 208) providing the background sound using a plurality of background sound sources, the method, performed at one of the at least one personal portable terminal, comprising steps of:
a) connecting with a background sound providing service unit (202), wherein the background sound providing service unit (202) includes a database storing a plurality of background sound source files;
b) downloading a background sound source file from the background sound providing unit (202), wherein the downloaded background sound source file is stored in a memory unit of the personal portable terminal;
c) setting the downloaded background sound source file correspondingly to at least one of plural dial keys of the personal portable terminal by using a background sound control program;
d) establishing a communication channel between the calling terminal and the receiving terminal according to a connection request call, wherein the communication channel is established by at least one MSC within the wire or wireless communication network (200);
e) wherein execution of the background sound, intermission of the execution, and adjustment of output level is controlled in the communication channel according to a key input of the personal portable terminal; and
f) wherein the execution of the background sound is controlled by a key input signal corresponding to a number key 1 to 9 of the personal portable terminal, the intermission of the execution is controlled by a key input signal corresponding to the number key 0 of the personal portable terminal, and the adjustment of the output level is controlled by a key input signal corresponding to the star key * or the pound key # of the personal portable terminal.

2. A method according to claim 1, further comprising steps of: a) receiving a list of background sound source files from the background sound providing service unit; and b) transmitting a download request signal to the background sound providing service unit, with respect to at least one from the list of background sound source files.

3. A method according to claim 2, further comprising a step of transmitting a pre-listening request signal to the background sound providing service unit, with respect to at least one from the list of background sound source files.

4. A method according to claim 1, further comprising a step of transmitting to the background sound providing service unit a telephone number of the personal portable terminal or the terminal identification, to which background sound source file is to be downloaded.

5. A method according to claim 1, further comprising a step of selecting a background sound communication mode by the calling terminal or the receiving terminal, before establishing the communication channel.

6. A method according to claim 1, further comprising a step of receiving a background sound control program from the background sound providing service unit, wherein the background sound control program is selected based on the type of the personal portable terminal.

7. A method according to claim 1, wherein the personal portable terminal has a background sound control program, which is stored in a memory unit equipped in the personal portable terminal.

8. A method according to claim 6 or 7, wherein the background sound control program includes a voice modulating program.

9. A method according to claim 1, wherein, when pressing down a first key of the personal portable terminal, a next background sound source file is reproduced, and when pressing down a second key of the personal portable terminal, a previous background sound source file is reproduced.

10. A method according to claim 1, wherein the connection to the background sound providing service unit includes a connection through a wire or wireless communication service using WEB and WAP, and through an automatic response service ARS.

11. A method according to claim 1, wherein the background sound providing service unit includes a personal computer and a personal digital assistant PDA.

## Patentansprüche

1. Verfahren zum Bereitstellen eines Hintergrundtons während einer Kommunikation über ein drahtgebundenes oder drahtloses Kommunikationsnetz (200), welches eine Mobilvermittlungsstelle MS eines rufenden Teilnehmers, die mindestens ein rufendes Endgerät verwaltet, und eine MS eines empfangenden Teilnehmers beinhaltet, die mindestens ein empfangendes Endgerät verwaltet, wobei mindestens ein personenbezogenes tragbares Endgerät des rufenden Endgeräts und des empfangenden Endgeräts (204, 206, 208) den Hintergrundton unter Verwendung einer Mehrzahl von Hintergrundtonquellen bereitstellt, wobei das an einem des mindestens einen personenbezogenen tragbaren Endgeräts durchgeführte Verfahren die Schritte aufweist:
a) Verbinden mit einer Hintergrundtonbereitstellungs-Diensteinheit (202), wobei die Hintergrundtonbereitstellungs-Diensteinheit (202) eine Datenbank beinhaltet, die eine Mehrzahl von Hintergrundton-Quellendateien speichert;
b) Herunterladen einer Hintergrundton-Quellendatei von der Hintergrundtonbereitstellungs-Diensteinheit (202), wobei die heruntergeladene Hintergrundton-Quellendatei in einer Speichereinheit des personenbezogenen tragbaren Endgeräts gespeichert wird;
c) Festlegen der heruntergeladenen Hintergrundton-Quellendatei entsprechend mindestens einer von mehreren Wahltasten des personenengebundenen tragbaren Endgeräts unter Verwendung eines Hintergrundton-Steuerprogramms;
d) Bilden eines Kommunikationskanals zwischen dem rufenden Endgerät und dem empfangenden Endgerät in Übereinstimmung mit einem Verbindungsanforderungsruf, wobei der Kommunikationskanal durch mindestens eine MSC in dem drahtgebundenen oder drahtlosen Kommunikationsnetz (200) gebildet wird;
e) wobei ein Ausführen des Hintergrundtons, ein Aussetzen des Ausführens und ein Einstellen eines Ausgabepegels in dem Kommunikationskanal in Übereinstimmung mit einer Tasteneingabe des personenbezogenen tragbaren Endgeräts gesteuert wird; und
wobei das Ausführen des Hintergrundtons durch ein Tasteneingabesignal gesteuert wird, das einer Zahlentaste 1 bis 9 des personenbezogenen tragbaren Endgeräts entspricht, das Aussetzen des Ausführens durch ein Tasteneingabesignal gesteuert wird, das der Zahlentaste 0 des personenbezogenen tragbaren Endgeräts entspricht, und das Einstellen des Ausgabepegels durch ein Tasteneingabesignal gesteuert wird, das der Sterntaste * oder der Rautetaste # des personenbezogenen tragbaren Endgeräts entspricht.

2. Verfahren nach Anspruch 1, das weiterhin die Schritte aufweist: a) Empfangen einer Liste von Hintergrundton-Quellendateien von der Hintergrundtonbereitstellungs-Diensteinheit; und b) Senden einer Herunterlade-Anforderungsignals zu der Hintergrundtonbereitstellungs-Diensteinheit bezüglich mindestens einer aus der Liste der Hintergrundton-Quellendateien.

3. Verfahren nach Anspruch 2, das weiterhin einen Schritt eines Sendens eines eines Vorabhör-Anforderungssignals zu der Hintergrundtonbereitstellungs-Diensteinheit bezüglich mindestens einer aus der Liste der Hintergrundton-Quellendateien aufweist.

4. Verfahren nach Anspruch 1, das weiterhin einen Schritt eines Sendens einer Telefonnummer des personenbezogenen tragbaren Endgeräts oder der Endgerätidentifikation, zu welcher eine Hintergrundton-Quellendatei herunterzuladen ist, zu der Hintergrundtonbereitstellungs-Diensteinheit aufweist.

5. Verfahren nach Anspruch 1, das weiterhin einen Schritt eines Auswählens einer Hintergrundton-Kommunikationsbetriebsart durch das rufende Endgerät oder das empfangende Endgerät vor einem Bilden des Kommunikationskanals aufweist.

6. Verfahren nach Anspruch 1, das weiterhinn einen Schritt eines Empfangens eines Hintergrundton-Steuerprogramms von der Hintergrundtonbereitstellungs-Diensteinheit aufweist, wobei das Hintergrundton-Steuerprogramm auf der Grundlage des Typs des personenbezogenen tragbaren Endgeräts ausgewählt wird.

7. Verfahren nach Anspruch 1, wobei das personenbezogene tragbare Endgerät ein Hintergrundton-Steuerprogramm aufweist, welches in einer Speichereinheit gespeichert ist, mit welcher das personenbezogene tragbare Endgerät ausgestattet ist.

8. Verfahren nach Anspruch 6 oder 7, wobei das Hintergrundton-Steuerprogramm ein Sprachmodulationsprogramm beinhaltet.

9. Verfahren nach Anspruch 1, wobei dann, wenn eine erste Taste des personenbezogenen tragbaren Endgeräts niedergedrückt wird, eine nächste Hintergrundton-Quellendatei wiedergegeben wird und dann, wenn eine zweite Taste des personenbezogenen tragbaren Endgeräts niedergedrückt wird, eine vorhergehende Hintergrundton-Quellendatei wiedergegeben wird.

10. Verfahren nach Anspruch 1, wobei die Verbindung zu der Hintergrundtonbereitstellungs-Diensteinheit eine Verbindung über einen drahtgebundenen oder eine drahtlosen Kommunikationsdienst unter Verwendung von WEB and WAP und über einen automatischen Beantwortungsdienst beinhaltet.

11. Verfahren nach Anspruch 1, wobei die Hintergrundtonbereitstellungs-Diensteinheit einen Personalcomputer und einen persönlichen digitalen Assistenten PDA beinhaltet.

## Revendications

1. Procédé de génération de bruit de fond pendant une communication par le biais d'un réseau de communication (200) par fil ou sans fil, qui comprend un centre de commutation mobile MSC d'appelant gérant au moins un terminal appelant et un MSC de récepteur qui gère au moins un terminal récepteur, au moins un terminal portable personnel du terminal appelant et du terminal récepteur (204, 206, 208) générant le bruit de fond en utilisant une pluralité de sources de bruit de fond, le procédé, exécuté à un du au moins un terminal portable personnel, comprenant les étapes consistant à:
a) se connecter à une unité de service générant un bruit de fond (202), où l'unité de service générant un bruit de fond (202) comprend une base de données stockant une pluralité de fichiers source de bruit de fond ;
b) télécharger un fichier source de bruit de fond à partir de l'unité de service générant un bruit de fond (202), où le fichier source de bruit de fond est stocké dans une unité de mémoire du terminal portable personnel ;
c) définir le fichier source de bruit de fond de manière correspondante à au moins une de plusieurs touches de numérotation du terminal portable personnel en utilisant un programme de contrôle de bruit de fond ;
d) établir un canal de communication entre le terminal appelant et le terminal récepteur selon un appel de demande de connexion, où le canal de communication est établi par au moins un MSC dans le réseau de communication par fil ou sans fil (200) ;
e) dans lequel l'exécution du bruit de fond, l'intermission de l'exécution, et le réglage du niveau de sortie sont contrôlés dans le canal de communication selon une entrée de touche du terminal portable personnel ; et
f) dans lequel l'exécution du bruit de fond est contrôlée par un signal d'entrée de touche correspondant à une touche numérique 1 à 9 du terminal portable personnel, l'intermission de l'exécution est contrôlée par un signal d'entrée de touche correspondant à la touche numéro 0 du terminal portable personnel, et le réglage du niveau de sortie est contrôlé par un signal d'entrée de touche correspondant à la touche astérisque * ou à la touche dièse # du terminal portable personnel.

2. Procédé selon la revendication 1, comprenant en outre les étapes consistant à: a) recevoir une liste de fichiers source de bruit de fond provenant de l'unité de service générant le bruit de fond; et b) transmettre un signal de demande à télécharger à l'unité de service générant le bruit de fond, par rapport à au moins un de la liste de fichiers source de bruit de fond.

3. Procédé selon la revendication 2, comprenant en outre les étapes consistant à transmettre un signal de demande de pré-écoute à l'unité de service générant le bruit de fond, par rapport à au moins un de la liste de fichiers source de bruit de fond.

4. Procédé selon la revendication 1, comprenant en outre l'étape consistant à transmettre à l'unité de service générant le bruit de fond un numéro de téléphone du terminal portable personnel ou une identification du terminal, auquel le fichier source de bruit de fond doit être téléchargé.

5. Procédé selon la revendication 1, comprenant en outre l'étape consistant à sélectionner un mode de communication de bruit de fond par le terminal appelant ou le terminal récepteur, avant d'établir le canal de communication.

6. Procédé selon la revendication 1, comprenant en outre l'étape consistant à recevoir un programme de contrôle de bruit de fond de l'unité de service générant le bruit de fond, dans lequel le programme de contrôle de bruit de fond est sélectionné sur la base du type du terminal portable personnel.

7. Procédé selon la revendication 1, dans lequel le terminal portable personnel a un programme de contrôle de bruit de fond, qui est stocké dans une unité de mémoire dont est équipé le terminal portable personnel.

8. Procédé selon la revendication 6 ou 7, dans lequel le programme de contrôle du bruit de fond comprend un programme de modulation de la voix.

9. Procédé selon la revendication 1, dans lequel, quand on appuie sur une première touche du terminal portable personnel, un fichier source de bruit de fond suivant est reproduit, et quand on appuie sur une deuxième touche du terminal portable personnel, un fichier source de bruit de fond précédent est reproduit.

10. Procédé selon la revendication 1, dans lequel la connexion à l'unité de service générant le bruit de fond comprend une connexion par le biais d'un service de communication par fil ou sans fil utilisant WEB ou WAP, et par le biais d'un service de réponse automatique ARS.

11. Procédé selon la revendication 1, dans lequel l'unité de service générant le bruit de fond comprend un ordinateur personnel ou un assistant numérique personnel PDA.
